# EUROPEAN PATENT SPECIFICATION

(11) **EP 3 328 312 B1**
(45) Date of publication and mention of the grant of the patent: **09.09.2020**
(21) Application number: 16831956.4
(22) Date of filing: 14.07.2016
(51) Int. Cl.: A61C 7/28

(54) **AN ORTHODONTIC ANCHORAGE DEVICE**
KIEFERORTHOPÄDISCHE VERANKERUNGSVORRICHTUNG
DISPOSITIF D'ANCRAGE ORTHODONTIQUE

(30) Priority: 31.07.2015 AU 2015903045
(43) Date of publication of application: 06.06.2018
(73) Proprietor: Erskine Products Pty Ltd, North Curl Curl NSW 2099 (AU)
(72) Inventor: ERSKINE-SMITH, Craig Mathew, North Curl Curl, NSW 2099 (AU)
(74) Representative: Grünecker Patent- und Rechtsanwälte PartG mbB
(86) International application number: PCT/AU2016/000250
(87) International publication number: WO 2017/020062

(56) References cited:
- EP-A2- 0 940 125
- EP-B1- 0 820 735
- WO-A1-2013/140205
- FR-A1- 2 972 342
- US-A- 3 238 619
- US-A- 3 494 034
- US-A- 5 320 526
- US-A- 6 033 217
- US-A1- 2003 113 683
- US-A1- 2012 129 121
- US-A1- 2014 302 448

## Description

### FIELD

The present invention relates to orthodontic anchors and more particularly but not exclusively to orthodontic anchorages that extend between and attach to two adjacent teeth.

### BACKGROUND

Orthodontics usually involved the treatment of either all the teeth in the mouth or all the teeth in one arch. There has been an increasing trend in recent decades for the cosmetically motivated treatment of only the anterior teeth - especially those primarily visible in the smile which are often the maxillary teeth. As there are six anterior teeth involved in the smile, be they maxillary or mandibular, this anterior segment is often referred to as the "social six". The treatment of these anterior teeth with clear plastic removable shells or trays - such as the Invisalign brand, the Clear Smile brand and many other emerging clones of this technology is highlighting the size of the market in the alignment and treatment of the anterior teeth as distinct from the correction of all the orthodontic problems within the mouth including the posterior segments. Many people, especially adults, are primarily concerned with the appearance of their crooked front teeth. They are not as concerned about fixing cross bite, insufficient arch width, open or deep bites or irregularities of alignment in the posterior segments.

A new industry is developing within orthodontics wherein the anterior segments, which may also include some of the pre-molars, are being treated with conventional brackets and wires but with a limited objective of levelling and aligning the anterior teeth and making them look cosmetically acceptable in as short as time possible. This emerging industry is what some people call 'six-month orthodontics'. However there are traps for unskilled operators in treating what appears to be a superficially simple anterior levelling and aligning treatment.

Problems arising in relation to the above treatments have not been experienced by orthodontists in the past because they generally treated the whole mouth and were not as focused on the simple cosmetic needs of the anterior teeth of adult patients. Practitioners are sometimes trained in weekend hotel based orthodontic classes, as distinct from lengthy courses in universities, with the result that skill levels in general practitioners may range from low to high. Highly skilled operators know how to deal with anchorage issues, how to prevent problems and how to deal with them if they arise. Low skilled operators can encounter all sorts of difficulty when anchorage units start moving unexpectedly, from which it is very hard to recover if they don't know how to prevent or reverse slippage of an anchorage unit, and have the ability and experience to do full mouth bracketing.

Orthodontists are generally highly skilled and highly trained specialists within dentistry, trained to a level substantially higher than most undergraduate training for a general dentist. However many dentists embark upon treatment of the anterior segments on the advice of training institutions and promoters of six-month orthodontics. They may not be thoroughly grounded in anchorage principles or be aware of how to prevent problems that arise in the movement of anchor units coming from or as a result of the treatment of the anterior segment.

Generally dentists embarking upon plastic tray orthodontics such as Invisalign, or anterior cosmetic bracket based orthodontics will quite often strip the teeth or remove enamel on either side of a tooth at the contact point in order to facilitate a realignment of the teeth in the existing arch form. It is highly desirable that any amount of tooth that is stripped or removed is not wasted in forward or mesial slippage of the anchorage but is dedicated towards the realignment of the anterior teeth.

When the anterior teeth are bracketed and have wires attached to those brackets via means of elastic or wire ligatures there is often a degree of friction between the wire and the bracket. During the unravelling and straightening phase referred to as levelling and aligning, the anterior teeth have a strong tendency to move towards and angle towards the buccal, partly due to the friction between the wire and the bracket. This tendency happens more so when the teeth are severely crowded, because as the wire straightens it is driven forward as a result of the friction in the premolars segments. Even though there may have been sufficient enamel stripped from between the anterior teeth to allow them to align perfectly in a reasonable arch form, quite often they will realign in a buccally repositioned arch form and have gaps or spaces between them. This can be due to the frictional forces between the bracket and the wire often associated with the use of elastic ligatures, or even wire ligatures.

In order to close those gaps many dentists will place an elastomeric thread or chain, from the first molar or sometimes the second molar around the anterior segment to the other first or second molar on the other side of the arch. This is known as a C chain and has the effect of pulling the anterior teeth back towards the molars and closing the gaps. Unfortunately the molars do not necessarily stay where they were originally positioned, even though they are bigger teeth and have a higher anchorage value than an individual incisor, when the incisors as a group are pulling on the molars either individually or as a group. There may be significant mesial movement of the molars and this is highly undesirable in cases of stripping. There is already a strong tendency for molars to drift towards the mesial when a tooth is extracted on the mesial side of the molar. This tendency is only made worse when elastic materials such as C chain are pulling that molar towards the mesial.

Some orthodontists will employ a device known as a transpalatal arch in an attempt to lock the buccal roots into the buccal cortical plate and reduce their ability to move anteriorly. However this is a reasonably involved device to make and many general dentists would prefer not to make it, or, will not have sufficient training to understand how this device works or how to use it. Moreover it is not a foolproof device. Slippage can still occur and valuable stripped tooth material can be wasted in this anchor slippage.

Known devices also utilise two molar pads which can be adhered or bonded to the buccal enamel of the two molars, usually referred to as the first and second molars, in any one arch - typically on the buccal side for greater comfort to the tongue. These molar pads may be glued or bonded and form the base foundation for the metallic device that attaches onto them which then engages the arch wire. However it is also known to replace the molar pads with molar bands which wrap around the tooth in order to attach firmly to the tooth. Attached onto these bands or pads are what is usually known in orthodontics as a buccal tube. Sometimes there is a secondary tube available for the insertion of wires from headgear, or a secondary wire. Other times there is a slot instead of a tube so that the wire can be placed on top and into the slot rather than inserted into the tube. Sometimes the tube has a loosely affixed lid on it which can be peeled off. This is called a convertible tube so that it can be converted to a slot if the operator prefers.

Malaligned molars are generally not splinted or frozen in their malaligned condition - they would typically be aligned by the arch wire due to the fact that most of the time the molar brackets or tubes are placed in the conventional ideal position relative to the tooth. The arch wire then does the straightening as per the classic straight wire technique, in which the brackets are all positioned ideally and the wire performs the orthodontic movements just by being straight and without the operator having to make complicated bends in the wire to move the teeth into an ideal aligned straightened condition.

Quite often the molars are not ideally aligned but the patient is not having any functional problem and does not wish them to be the cause of delay in treating the anterior cosmetic problem. Typically dentists and orthodontists will be treating a patient for 18 months or more for conventional orthodontics. Accordingly there is plenty of time available for them to realign the posterior teeth. However with social six or six months orthodontics the pressure is on the dentist or the orthodontist to get the cosmetic result as fast as possible so that the braces, which are not particularly pleasant to look at, and can be very uncomfortable and cause substantial ulceration in some patients, can be removed. Speed is of the essence especially when wires and brackets are used. The patients typical chief complaint is the unsightly or unpleasant nature of their natural tooth anterior malalignment, placing brackets and wires only makes this cosmetic problem worse, and the sooner the brackets and wires can come off the happier the patient will generally be.

During a levelling and aligning phase the arch wire typically extends distantly from the last bracket which is typically on the first molar. As this arch wire extends towards the distal it can cause substantial irritation and ulceration to the cheek and can even impale the cheek mucosa and cause substantial difficulty and sometimes an emergency for the patient. By placing the wire inside the secondary buccal tube it eliminates the ability of the wire to irritate the cheek and allows the wire to extend distantly a substantial distance inside the tube without tissue irritation thus allowing a long or a longer period of time between appointments. Typically in conventional orthodontics, appointments are made every month and the excess wire that is protruding from the distal of the last bracket is trimmed back using a distal end cutter. This may cut the wire almost flush with the distal end of the bracket and provide relief for a certain time but inevitably as the anterior teeth straighten this cut wire will extend distantly and into the cheek and potentially cause substantial cheek irritation. Most conventional orthodontic treatment, social six or six-month orthodontic treatment uses individual brackets on the first molar or the first and second molars with the wire always being a source of irritation unless it is cut back flush or cinched back (Bent 180° to form a small loop). However even then the wire loop can sometimes cause cheek irritation. Cinching back nickel titanium can be very difficult due to the high elastic properties and brittleness of this wire if it is forced back tight. It is also an extra step for the operator to perform and requires some skill to make the bend at the correct point. Inserting an un-cinched wire into a secondary buccal tube is a lot easier, especially for semiskilled general practitioner dentists who don't often do orthodontics as specialist orthodontists do.

A further disadvantage of known orthodontic anchors, is that the anchors consist of a pad that is fixed to the tooth, with the pad then providing a pair of projections between which there is a groove or slot. The orthodontic wire is placed in the groove. For the anchor to work correctly, the groove must be correctly oriented, and the wire must fit intimately into the groove. This provides the dentist with little leeway in respect of misalignment of the grooves/pad. If the wire is a loose fit then the tooth can move forward before the wire engages the groove and resists its forward tipping. Typically wires are small to start with and only fit the groove towards the end of the treatment - during which time the Anchorage value of this situation is very limited.

US2014/302448A1, FR2972342A1, US3238619A, WO2013/140205A1 and US2012/129121A1 also disclose orthodontic anchors.

### OBJECT

It is the object of the present invention to overcome or substantially ameliorate at least one of the above discussed disadvantages in respect of orthodontic devices.

### SUMMARY OF INVENTION

The present invention is concerned with an orthodontic anchor as defined in claim 1. Preferred embodiments or the orthodontic anchor are defined in dependent claims 2 to 6. Further, the present invention is concerned with an orthodontic anchor assembly as defined in claim 7. Preferred embodiments or the orthodontic anchor assembly are defined in dependent claims 8 to 11.

### BRIEF DESCRIPTION OF DRAWINGS

Preferred forms of the present invention will now be described by way of example with reference to the accompanying drawings wherein;
Figure 1 is a schematic view of an orthodontic anchor fixed to a tooth;
Figure 2 is a schematic side elevation of the anchor of Figure 1;
Figure 3 is a further schematic view of the anchor of Figure 1;
Figure 4 is a schematic view of an orthodontic anchor assembly;
Figure 5 is a schematic view of a modification of the assembly of Figure 4;
Figure 6 is a further schematic view of a modification of the anchor of Figure 4;
Figure 7 is a still further schematic view of an anchor assembly;
Figure 8 is a schematic longitudinal section of a tube employed in the assembly of Figures 1 to 7;
Figure 9 is a schematic sectioned end elevation of the tube of Figure 8;
Figure 10 is a schematic end elevation of the tube of Figure 8 sectioned along the line 10-10;
Figure 11 is a schematic end elevation of portion of the anchor assembly of Figure 7;
Figure 12 is a schematic view of an orthodontic anchor fixed to teeth;
Figure 13 is a further schematic view of an orthodontic anchor fixed to the teeth; and
Figures 14 to 17 are schematic isometric views of orthodontic anchors employed in the embodiments of Figures 1 to 13.

### DESCRIPTION OF EMBODIMENTS

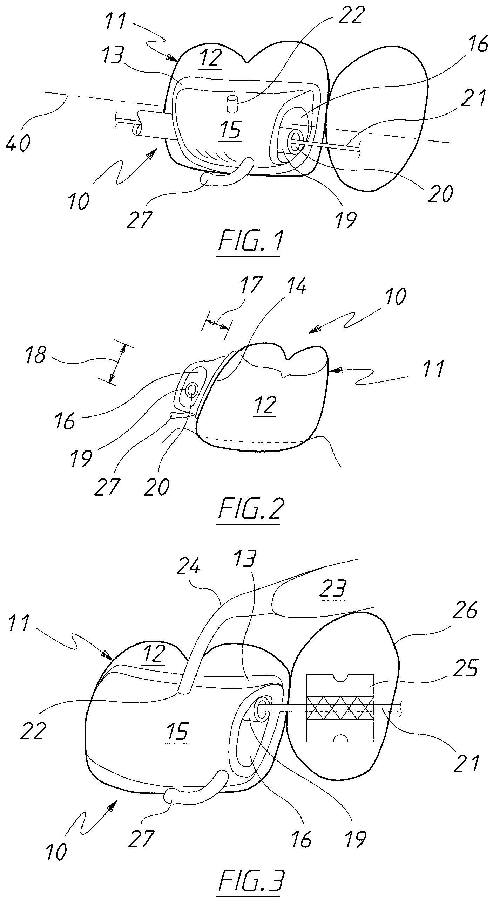

In Figures 1, 2 and 3 there is schematically depicted an orthodontic anchor 10. In this particular illustration the anchor 10 is attached to a tooth 11, that may, for example, be a molar, with the anchor 10 attached to the tooth surface 12.

The anchor 10 includes a base 13 which is in the form of a plate, having a surface 14 that is fixed to the surface 12 by being adhered or bonded to the surface 12. The surface 12 may be on the palate side or the buccal side of the tooth 11.

Fixed to or formed integral with the base 13 is a duct portion 15, that projects from the base 13 so as to extend from the base 13 in a direction away from the surface 14. Preferably, the base 13 and portion 15 are integrally formed from metal.

The duct portion 15 provides a through passage 16, that is generally parallel to the surface 14.

The passage 16 may be of any desired cross-section, such as circular, elliptical, square or even round. However most preferably the passage 16 is generally oval in transverse cross-section so as to be upwardly elongated. Accordingly, the passage 16 has transverse width 17 that is less than the transverse length 18. That is, the passage 16 is transversely elongated in the direction generally parallel to the base 14, and transverse of the longitudinal axis 40 of the anchor 10.

Extending through the passage 16 is a tube 19 having a longitudinal passage 20. The tube 19 is of a smaller cross-section that the passage 16 so that there is spaced between the outer longitudinal surface of the tube 19, and the internal surface of the portion 15 surrounding the passage 16. Preferably, the tube 19 is plastically deformable so that bends can be provided, with the bends being located in the passage 16.

The passage 20 is to provide for an elongated orthodontic element, such as a wire 21. The orthodontic element passes longitudinally through the passage 20 and move relative to the passage 20. The element may also be a chain.

Preferably, the element 21 may be resilient deformable, and/or plastically deformable.

When the tube 19 is correctly located in the passage 16, a flowable settable substance is injected in the space between the tube 19 and the portion 15, with the substance setting to secure the tube 19 in the desired position within the passage 16.

Preferably, the portion 15 is provided with an injection passage 22 to which an applicator 23 is applied to inject the settable material into the passage 16. The applicator 23 would have a tubular nozzle 24 that would have an end extremity that fits within the passage 22.

Typically the abovementioned settable substance would be a self-curing cement such as a composite resin.

The element 21 would then pass from the anchor 10, to an adjacent anchor device (pad) 25 fixed to an adjacent tooth 26.

Preferably, the anchor 10 would include a hook 27 or other projection that would be provided to assist the dental professional in positioning the anchor 10, or may also aid in the attachment of other orthodontic devices to the anchor 10.

Preferably, the portion 15 is arcuate outwardly in configuration to inhibit irritation.

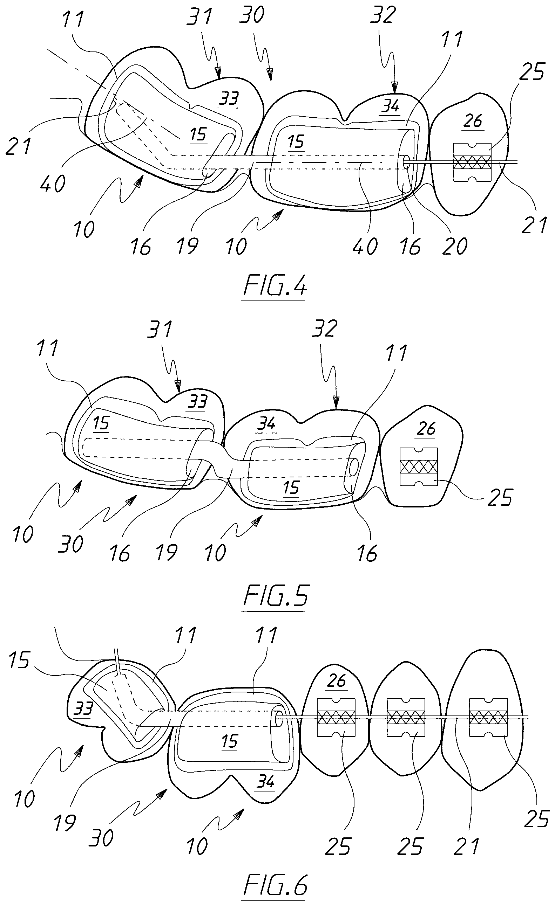

In Figure 4 of the accompanying drawings there is schematically depicted an orthodontic anchor assembly 30. The assembly 30 includes two anchors 10 (as described previously) with the tube 19 passing therebetween and fixed to both bases so that the assembly 30 is fixed to two adjacent teeth 31 and 32, more particularly the anchors 10 are fixed to surfaces 33 and 34 of the teeth 31 and 32.

The tube 19 is fixed to both bases 11 by the abovementioned settable substance being located in the passages 16 and set to fix the tube 19 to both bases 11.

As can be seen with reference to Figure 4, the tube 19 can be deformed to be positioned correctly in the passages 16 of the adjacent anchors 10.

In the embodiment of Figure 5, the tube 19 is of a different configuration to the tube as shown in Figure 4. In Figure 5, the tube 19 is deformed to accommodate misalignment of the adjacent teeth 33 and 34.

A further modification of the tube 19 is shown in Figure 6.

The anchor 10 of Figure 5 can be used with a typical curve of Spee, or an excessive one. The tube 19 can be aligned in the most mesial anchorage element such that the wire 21 will run into the orthodontic bracket 25 (labelled OB) which is typically on the premolar without any significant deflection in the element and without causing the premolar to move in any particular direction, unless the dental professional should desire that.

The tube 19 has a bend correctly directs the tube 19 in order for the tube 19 to fit within the passage 16 without any stress (which would cause movement to the anchor units).

The anchor 10 of Figure 6 is used where the second molar has over erupted. The angular 10 is placed (on the buccal surface of the molars typically) in their most favourable alignment and position to get the greatest contact with and adhesion to the tooth. The tube 19 is then bent using standard orthodontic pliers to create an offset or an angular bend, in this case an offset bend is shown. This allows the tube 19 on the first molar 34 to have a trajectory that aims at and delivers the element 21 within it passively into the slot of the orthodontic bracket 25 on the adjacent premolar 26 without any stress between the molar 34 and the premolar 33, unless of course it is desired to move the molar 34 or premolar 33 relative to each other.

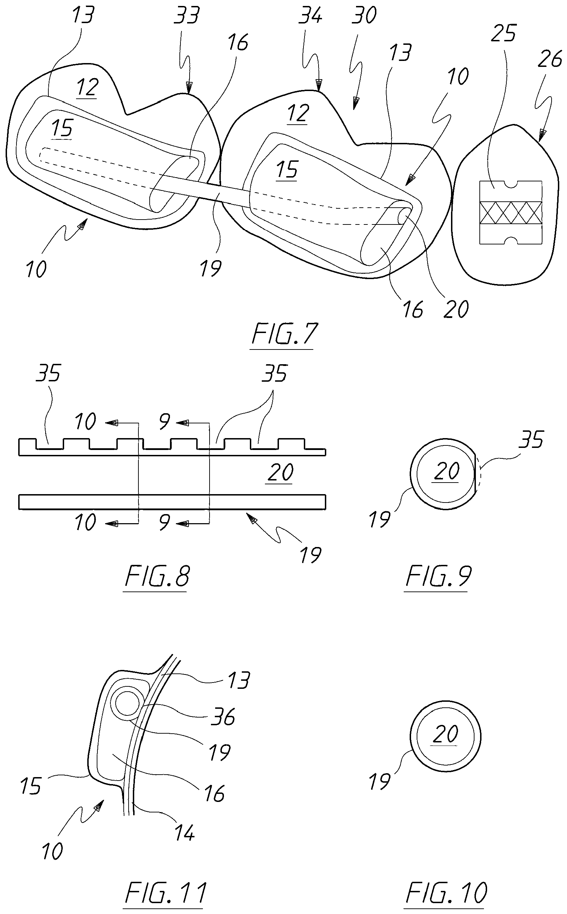

Where a lower molar has been extracted and an upper first molar has substantially super-erupted, an assembly 30 as shown in Figure 7 is used.

The tube 19 can be adjusted within the passage 16 and thus allow the operator to put the orthodontic wire 21 in a neutral stress free position by moving the tube 19, and the wire 24 within it, to one end of the available slot in the portion 15, as shown in figure 4, where the tube 19 has been moved to the extreme gingival edge of the portion 15. This then allows the assembly 30 to be used as a passive anchorage unit, not causing unwanted movements in adjacent teeth, and at the same time compensating (within limits/) for variations in molar eruption and angulation.

Where a first molar may have been removed and there is a mesial drift of the second and third molars. These teeth typically drift with a substantial tilt to the mesial. The tube 19 is in the most favourable and anatomically correct position, and the tube 19 in such a way as to allow them to be joined together whilst allowing the tube 19 to have a trajectory towards the slot on the adjacent premolar bracket, thus allowing a passive placement of the wire 21.

A bend in the tube 19 can be located in the passage 16 at an appropriate distance from the passage 16 entrance so that forces are internally reciprocated, and have no effect on moving the premolar.

The tube 19, may be generally circular in transverse cross-section as shown in Figure 10, or may be oval or square in transverse cross-section. However, the tube 19 may be also provided with irregularities to aid in securing it to the portion 15. In the embodiment of Figure 8, the tube 19 has transverse slots or grooves 35 within which the abovementioned settable substance hardens to aid in securing the tube 19 in position. In an alternative embodiment, the tube 19 may have a flattened portion 36 as shown in Figure 11.

The anchor assembly 30 can also be applied to the palatal surfaces of molars and pre-molars in various situations. It can be applied to first molars and used to then attach to a large diameter palatal wire 21 which transmits force through to a Nance button, either laboratory made, or made in situ from light cured composite.

The anchorage 10 makes it a lot easier for the dentist or orthodontist to quickly construct his own Nance button without the time delay, inconvenience, cost and inaccuracy of having a laboratory product made. Nance buttons made in situ fit perfectly and generally more accurately than laboratory made products and get less food debris underneath and less bad taste/bad smell as a result.

The anchor assembly 30 can be used to provide massive palatal anchorage in order to retract anterior dental segments such as Canine to canine, especially in cases of premolar extractions, or for retraction of teeth with excessive protrusion, such as in bimaxillary protrusive cases, and/or to retract segments of teeth such as pre-molars and canines to correct malaligned mid lines, or to distalize impacted canines without disturbing the existing symmetry or positive qualities of the existing dental arch due to abberent reciprocal forces.

The use of the assembly 30 on the maxillary teeth provides such substantial anchorage that it can be used simultaneously to retract both maxillary arch teeth and mandibular teeth by running the appropriate interarch class two elastics.

In addition to the retraction of anterior teeth the assembly 10 can also be positioned on premolars or canines, and then engaged with a sufficiently large diameter and rigid wire traversing the hard palate in the region of the rugae, and with the aid of a laboratory made or in situ Nance button, can be used to provide substantial anchorage against which entire molar posterior segments can be distalized as a block.

This is particularly helpful in cases of class two malocclusion-unilateral or bilateral, and in cases of maxillary excess and protrusive maxillary teeth.

Once these posterior segments are distalized into the ideal position and the appropriate bite relationship, the assembly 10 can then be removed from the premolars and fitted to these distalized molars and a Nance button attached in order to simultaneously both prevent them spontaneously relapsing towards the mesial, and to provide a source of anchorage in order to use them to retract rotate or move the anterior or premolar segments in order to fill any space that has been created by distalizing the posterior segments.

The assembly can be used for orthodontists and dentists who have provided optimal and comprehensive treatment and have moved the molars into the ideal position and relationship and who now desire them to be locked into that position, without the use of headgear or surgical devices such as implants or bone screws, with a minimal probability of mesial spontaneous drifting, and also to lock them in sufficiently to utilise them as anchorage units in order to retract or rotate or move other teeth in the dental arch, with minimal anchorage slip or untoward anchor teeth movement.

Grooves 35 can be cut or stamped or cast into the primary tube. These grooves (19, 35) mechanically engage the cement and stop slippage of the tube 19 relative to the cement, and by extension, stop movement relative to the tooth, thus forming a rigid splint that stops any mesial tilting and minimises mesial drift.

The rough cut edges are faced away from the cheek so as not to cause aggravation.

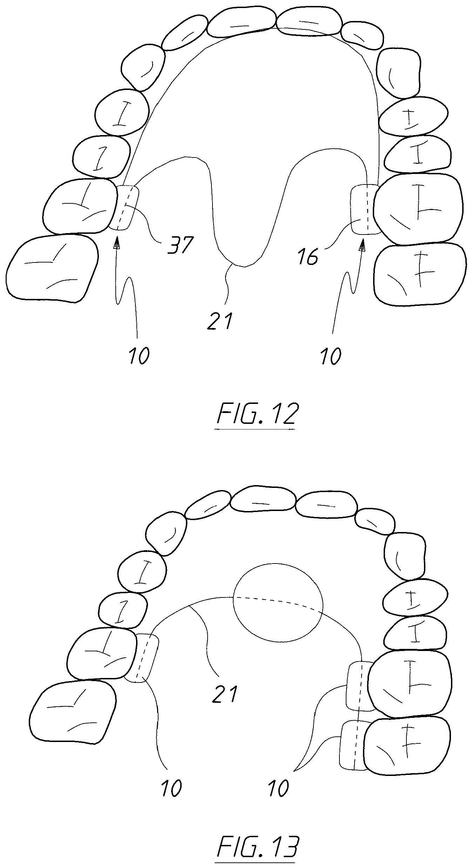

In Figure 12 there is schematically depicted a pair of the orthodontic anchors 10, with an orthodontic wire 21 extending therebetween. The wire 21 has end portions fixed in respective main passages 16 by the above described settable flowable substance.

In the embodiment of Figure 13, Nance assembly, includes at least one anchor, and then optionally one or two anchors 10, with the wire 21 secured to each of the anchors 10 by the abovementioned flowable substance.

In the embodiments of 12 and 13, there is no tube 19 employed, the wires 21 are directly fixed to the anchors 10 by the flowable substance.

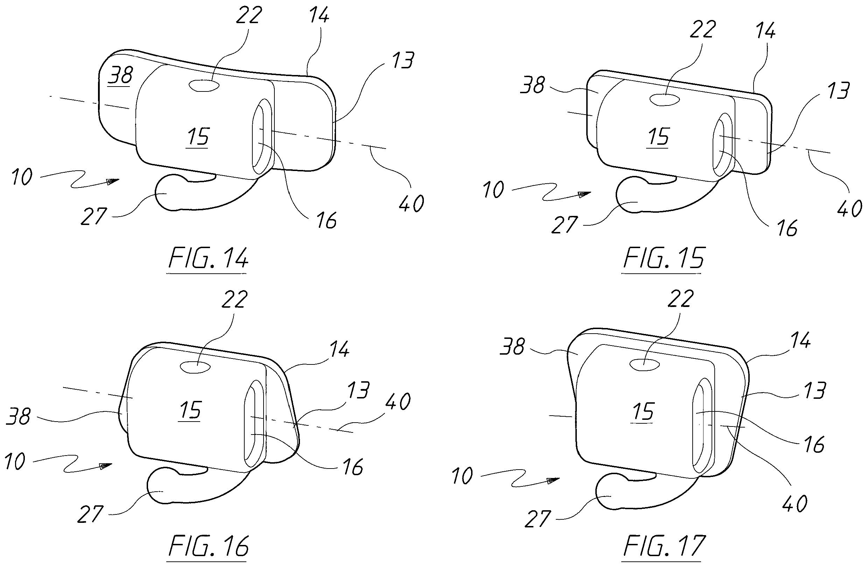

In Figures 14 to 17, there is schematically depicted various modifications of the anchor 10. In each of these embodiments, the base 13 is of a plate configuration so as to have the surface 14 that engages the tooth, and a surface 38 adjacent the duct portion 15. In the embodiment of Figure 14 the base 13 is arcuate so that the surface 38 is generally convex. In the embodiment of Figures 15, 16 and 17, the base 13 is generally planar, accordingly the surfaces 38 are generally flat.

In each of these embodiments, the passage 16 has the longitudinal axis 40, with the passage 16 preferably elongated in the direction transverse of the axis 40 but generally parallel to the surfaces 14 and 38. Each of the passages 16 has a transverse width, generally perpendicular to the surfaces 14 and 38, that is less than the width that is generally parallel to the surface 38.

The passage 16 is dimensioned so that the wires (or other elongated element) can be positioned in the passage 16 in a desired position and orientation, and then fixed in that position. This has the advantage of providing the dentist with more latitude in respect of positioning the anchor 10. A still further advantage is that the passage 16 can accommodate wires 21 of different diameters.

drifting, and also to lock them in sufficiently to utilise them as anchorage units in order to retract or rotate or move other teeth in the dental arch, with minimal anchorage slip or untoward anchor teeth movement.

Grooves 35 can be cut or stamped or cast into the primary tube. These grooves (19, 35) mechanically engage the cement and stop slippage of the tube 19 relative to the cement, and by extension, stop movement relative to the tooth, thus forming a rigid splint that stops any mesial tilting and minimises mesial drift.

The rough cut edges are faced away from the cheek so as not to cause aggravation.

In Figure 12 there is schematically depicted a pair of the orthodontic anchors 10, with an orthodontic wire 21 extending therebetween. The wire 21 has end portions fixed in respective main passages 16 by the above described settable flowable substance.

In the embodiment of Figure 13, Nance assembly, includes at least one anchor, and then optionally one or two anchors 10, with the wire 21 secured to each of the anchors 10 by the abovementioned flowable substance.

In the embodiments of 12 and 13, there is no tube 19 employed, the wires 21 are directly fixed to the anchors 10 by the flowable substance.

In Figures 14 to 17, there is schematically depicted various modifications of the anchor 10. In each of these embodiments, the base 13 is of a plate configuration so as to have the surface 14 that engages the tooth, and a surface 38 adjacent the duct portion 15. In the embodiment of Figure 14 the base 13 is arcuate so that the surface 38 is generally convex. In the embodiment of Figures 15, 16 and 17, the base 13 is generally planar, accordingly the surfaces 38 are generally flat.

In each of these embodiments, the passage 16 has the longitudinal axis 40, with the passage 16 preferably elongated in the direction transverse of the axis 40 but generally parallel to the surfaces 14 and 38. Each of the passages 16 has a transverse width, generally perpendicular to the surfaces 14 and 38, that is less than the width that is generally parallel to the surface 38.

The passage 16 is dimensioned so that the wires (or other elongated element) can be positioned in the passage 16 in a desired position and orientation, and then fixed in that position. This has the advantage of providing the dentist with more latitude in respect of positioning the anchor 10. A still further advantage is that the passage 16 can accommodate wires 21 of different diameters.

## Claims

1. An orthodontic anchor (10) including:
a base (13) having a base surface to be fixed to a tooth surface; and
a duct member (15) fixed to the base and projecting from the base in a direction away from the surface, and providing a through passage (16) extending generally parallel to the base surface and into which an orthodontic elongated element (21) may enter and that is to be fixed to the duct member (15) and therefore the base (13),
**characterized in that** the passage (16) is a main passage, and the duct member (15) includes a filling passage (22), the filling passage (22) extending to the main passage to provide for the delivery of a flowable settable material to said main passage to fix the element (21) to the duct member (15).

2. The orthodontic anchor of claim 1, wherein a tube (19) may extend through the passage (16), having a smaller cross-section than passage (16), so that there is space between the outer longitudinal surface of the tube (19) and the internal surface of the duct member (15) surrounding passage (16), and wherein a wire as the orthodontic elongated element (21) is provided into the tube (19).

3. The orthodontic anchor of claims 1 or 2, wherein the base (13) and duct member (15) are integrally formed.

4. The orthodontic anchor of claims 2 or 3, wherein the passage (16) has a longitudinal axis, and the passage (16) is elongated in a direction of said axis and generally parallel to said surface.

5. The orthodontic anchor of claim 4, wherein the passage (16) has a width that is transverse of said axis and generally parallel to said surface that is greater than a transverse width that is transverse of said axis and transverse relative to said surface.

6. The orthodontic anchor of claims 1 to 5, wherein the base (13) is a plate that is generally planar or is arcuate so as to have a convex surface adjacent the duct member.

7. An orthodontic anchor assembly (30) including the orthodontic anchor (10) of any of claims 1 to 6, the orthodontic anchor (10) being a first anchor, with the assembly including a further orthodontic anchor (10);
the further orthodontic anchor (10) including:
a base (11) having a base surface to be fixed to a tooth surface,
a duct member (15) fixed to the base and projecting from the base in a direction away from the base surface, and providing a main passage extending generally parallel to the base surface, and
a tube (19) passing through the main passage through which an orthodontic elongated element (21) is to pass to be secured to the base surface by the duct member (15);
wherein the orthodontic elongated element (21) of the first orthodontic anchor (10) is a tube (19), with the tube is a common tube extending between both anchors.

8. The orthodontic anchor assembly of claim 7, wherein the base (11) and duct member (15) of the further orthodontic anchor (10) are integrally formed.

9. The orthodontic anchor assembly of claim 7 or 8, wherein the further orthodontic anchor (10) includes the flowable settable material located in the main passage so as to be located between the tube (19) and duct member (15), and that is settable to secure the tube (19) to the duct member (15).

10. The orthodontic anchor assembly of claims 7 to 9, wherein the tube (19) of the further orthodontic anchor (10) is plastically deformable to provide for the formation of bends to be located in said main passage.

11. The orthodontic anchor assembly of claims 7 to 10, wherein the flowable settable material is located in each main passage to secure the common tube to each base.

## Patentansprüche

1. Kieferorthopädischer Anker (10), beinhaltend:
eine Basis (13), besitzend eine Basisoberfläche, die an einer Zahnoberfläche zu befestigen ist; und
ein Kanalelement (15), das an der Basis befestigt ist und von der Basis in einer Richtung weg von der Oberfläche vorsteht und einen Durchgang (16) bereitstellt, der sich im Allgemeinen parallel zur Basisoberfläche erstreckt und in den ein kieferorthopädisches längliches Element (21) eintreten kann, und das an dem Kanalelement (15) und daher an der Basis (13) zu befestigen ist,
**dadurch gekennzeichnet, dass** der Durchgang (16) ein Hauptdurchgang ist und das Kanalelement (15) einen Fülldurchgang (22) beinhaltet, wobei sich der Fülldurchgang (22) bis zum Hauptdurchgang erstreckt, um die Zufuhr eines fließfähigen, härtbaren Materials zu besagtem Hauptdurchgang zu ermöglichen, um das Element (21) am Kanalelement (15) zu befestigen.

2. Der kieferorthopädische Anker nach Anspruch 1, wobei sich eine Röhre (19) durch den Durchgang (16) erstrecken kann, die einen kleineren Querschnitt als der Durchgang (16) besitzt, so dass zwischen der äußeren Längsoberfläche der Röhre (19) und der Innenoberfläche des den Durchgang (16) umgebenden Kanalelements (15) Raum vorhanden ist, und wobei ein Draht als das kieferorthopädische längliche Element (21) in der Röhre (19) bereitgestellt ist.

3. Der kieferorthopädische Anker nach Anspruch 1 oder 2, wobei die Basis (13) und das Kanalelement (15) integral ausgebildet sind.

4. Der kieferorthopädische Anker nach Anspruch 2 oder 3, wobei der Durchgang (16) eine Längsachse besitzt und der Durchgang (16) in einer Richtung der Achse und im Allgemeinen parallel zu besagter Oberfläche verlängert ist.

5. Der kieferorthopädische Anker nach Anspruch 4, wobei der Durchgang (16) eine Breite besitzt, die quer zu besagter Achse und im Allgemeinen parallel zu besagter Oberfläche ist, die größer als eine Querbreite ist, die quer zu besagter Achse und quer zu besagter Oberfläche ist.

6. Der kieferorthopädische Anker nach den Ansprüchen 1 bis 5, wobei die Basis (13) eine Platte ist, die im Allgemeinen eben ist oder bogenförmig, so dass sie eine konvexe Oberfläche angrenzend an das Kanalelement besitzt.

7. Kieferorthopädische Ankeranordnung (30), die den kieferorthopädischen Anker (10) nach irgendeinem der Ansprüche 1 bis 6 beinhaltet, wobei der kieferorthopädische Anker (10) ein erster Anker ist, wobei die Anordnung einen weiteren kieferorthopädischen Anker (10) beinhaltet;
wobei der weitere kieferorthopädischen Anker (10) beinhaltet:
eine Basis (11), besitzend eine Basisoberfläche, die an einer Zahnoberfläche zu befestigen ist,
ein Kanalelement (15), das an der Basis befestigt ist und von der Basis in einer Richtung weg von der Basisoberfläche vorsteht und einen Hauptdurchgang bereitstellt, der sich im Allgemeinen parallel zur Basisoberfläche erstreckt, und
eine Röhre (19), das durch den Hauptdurchgang verläuft, durch den ein kieferorthopädisches längliches Element (21) hindurchgeführt werden soll, um durch das Kanalelement (15) an der Basisoberfläche befestigt zu werden;
wobei das kieferorthopädische längliche Element (21) des ersten kieferorthopädischen Ankers (10) eine Röhre (19) ist, wobei die Röhre eine gemeinsame Röhre ist, das sich zwischen beiden Ankern erstreckt.

8. Die kieferorthopädische Ankeranordnung nach Anspruch 7, wobei die Basis (11) und das Kanalelement (15) des weiteren kieferorthopädischen Ankers (10) integral ausgebildet sind.

9. Die kieferorthopädische Ankeranordnung nach Anspruch 7 oder 8, wobei der weitere kieferorthopädische Anker (10) das fließfähige härtbare Material beinhaltet, das sich in der Hauptpassage befindet, so dass es sich zwischen der Röhre (19) und dem Kanalelement (15) befindet, und das härtbar ist, um die Röhre (19) an dem Leitungselement (15) zu befestigen.

10. Die kieferorthopädische Ankeranordnung nach den Ansprüchen 7 bis 9, wobei das Rohr (19) des weiteren kieferorthopädischen Ankers (10) plastisch verformbar ist, um die Bildung von Biegungen zu ermöglichen, die in dem Hauptdurchgang angeordnet werden sollen.

11. Die kieferorthopädische Ankeranordnung nach den Ansprüchen 7 bis 10, bei der das fließfähige härtbare Material in jedem Hauptdurchgang angeordnet ist, um die gemeinsame Röhre an jeder Basis zu befestigen.

## Revendications

1. Ancrage orthodontique (10) comprenant :
une base (13) ayant une surface de base à fixer à une surface de dent ; et
un élément conduit (15) fixé à la base et se projetant depuis la base dans un sens éloigné de la surface, et fournissant un passage traversant (16) s'étendant généralement parallèle à la surface de base et dans lequel un élément orthodontique allongé (21) peut entrer et qui doit être fixé à l'élément conduit (15) et par conséquent à la base (13),
**caractérisé en ce que** le passage (16) est un passage principal, et que l'élément conduit (15) comprend un passage de remplissage (22), le passage de remplissage (22) s'étendant vers le passage principal pour fournir l'administration d'un matériau fluide pouvant être fixé audit passage principal pour fixer l'élément (21) à l'élément conduit (15).

2. Ancrage orthodontique selon la revendication 1, un tube (19) pouvant s'étendre à travers le passage (16), ayant une coupe transversale plus petite que celle du passage (16), de sorte qu'il existe un espace entre la surface longitudinale externe du tube (19) et la surface interne de l'élément conduit (15) entourant le passage (16), et un fil comme élément orthodontique allongé (21) étant disposé dans le tube (19).

3. Ancrage orthodontique selon les revendications 1 ou 2, la base (13) et l'élément conduit (15) étant formés d'un seul tenant.

4. Ancrage orthodontique selon les revendications 2 ou 3, le passage (16) ayant un axe longitudinal, et le passage (16) étant allongé dans un sens dudit axe et généralement parallèle à ladite surface.

5. Ancrage orthodontique selon la revendication 4, le passage (16) ayant une largeur qui est transversale par rapport audit axe et généralement parallèle à ladite surface qui est supérieure à une largeur transversale qui est transversale pour ledit axe et transversale par rapport à ladite surface.

6. Ancrage orthodontique selon les revendications 1 à 5, la base (13) étant une plaque qui est généralement plane ou qui est arquée afin de présenter une surface convexe adjacente à l'élément conduit.

7. Ensemble d'ancrage orthodontique (30) comprenant l'ancrage orthodontique (10) selon l'une quelconque des revendications 1 à 6, l'ancrage orthodontique (10) étant une première ancre, avec l'ensemble comprenant un ancrage orthodontique (10) supplémentaire ;
l'ancrage orthodontique (10) supplémentaire comprenant :
une base (11) ayant une surface de base à fixer à une surface de dent,
un élément conduit (15) fixé à la base et se projetant depuis la base dans un sens éloigné de la surface de base, et fournissant un passage principal s'étendant généralement parallèle à la surface de base, et
un tube (19) passant à travers le passage principal à travers lequel un élément orthodontique allongé (21) doit passer pour être solidement fixé à la surface de base par l'élément conduit (15) ;
l'élément orthodontique allongé (21) du premier ancrage orthodontique (10) étant un tube (19), avec le tube étant un tube commun s'étendant entre les deux ancres.

8. Ensemble d'ancrage orthodontique selon la revendication 7, la base (11) et l'élément conduit (15) de l'ancrage orthodontique (10) supplémentaire étant formés d'un seul tenant.

9. Ensemble d'ancrage orthodontique selon la revendication 7 ou 8, l'ancrage orthodontique (10) supplémentaire comprenant le matériau fluide pouvant être fixé localisé dans le passage principal afin d'être localisé entre le tube (19) et l'élément conduit (15), et qui peut être fixé pour solidement fixer le tube (19) à l'élément conduit (15).

10. Ensemble d'ancrage orthodontique selon les revendications 7 à 9, le tube (19) de l'ancrage orthodontique (10) supplémentaire étant plastiquement déformable pour permettre la formation de courbes à localiser dans ledit passage principal.

11. Ensemble d'ancrage orthodontique selon les revendications 7 à 10, le matériau fluide pouvant être fixé étant localisé dans chaque passage principal pour fixer solidement le tube commun à chaque base.
